# EUROPEAN PATENT APPLICATION

(11) **EP 1 313 287 A2**
(43) Date of publication of application: **21.05.2003**
(21) Application number: 02023287.2
(22) Date of filing: 17.10.2002
(51) Int. Cl.: H04L 29/06

(54) **SIP-level confidentiality protection**

(30) Priority: 20.11.2001 US 989806
(71) Applicant: Nokia Corporation, 02150 Espoo (FI)
(72) Inventor: Haukka, Tao, 90580 Oulu (FI); Pirttimaa, Tarja, 90120 Oulu (FI)
(74) Representative: Leson, Thomas Johannes Alois, Dipl.-Ing.

(57) **Abstract**

A session initiation protocol message includes confidentiality protection in that the sender of the message is identified using a temporary identity index generated by calculating a hash function for a private key and public information which indicates the sender. The result of the calculation of the hash function is the temporary identity index and is associated with a specific sender-receiver pair.

## Description

### BACKGROUND OF THE INVENTION

### 1. Field of the Invention

The present invention relates to a method and system for confidentiality protection in a session initiation protocol message transmitted between user equipment and network element in a communication network.

### 2. Description of the Related Art

Many applications on the Internet such as Internet Protocol (IP) multimedia applications require the creation and management of sessions for exchanging data between participants of the session. Session Initiation Protocol (SIP) is a signaling protocol that has been developed for facilitating the establishment, modification, and termination of IP multimedia sessions such as Internet telephony calls. The specification for SIP are described in an Internet Engineering Task Force (IETF) standard RFC2543 version 04, July 20, 2001, entitled "SIP: Session Initiation Protocol" (RFC2543bis-04). To initiate or establish a session, an SIP message is generated at a user's user equipment (UE) and is sent to the intended recipient via a communication network.

The current work plan of the third generation partnership project (3GPP) states that confidentiality protection may optionally be applied to each section of a transmission path of a message transmitted between the UE and a home network of the UE, i.e., in a hop-by-hop fashion. The first hop from the UE is to a network element in the communication network with which the UE is in direct communication (the network element may be in either a visiting network or the home network depending on the UE location). Full confidentiality requires end-to-end encryption in which the entire SIP message is encrypted. This type of end-to-end encryption relies on keys shared by the two user agents involved in the request. However, section 18.1.1 of RFC2543bis-04 states that the SIP request or response, i.e., SIP messages, cannot be encrypted end-to-end because some of the header fields such as the "To" and "Via" fields need to be visible to proxy servers so that the SIP messagecan be properly routed. Accordingly, an SIP message is encrypted in SIP-level by splitting the message to be sent into a part to be encrypted and a short header that remains clear, i.e., not encrypted.

### SUMMARY OF THE INVENTION

It is an object of the present invention to provide confidentiality protection in messages sent from a user equipment (UE) to a network element in a communication network with which the UE is in direct communication.

According to a first embodiment of the present invention, a method for confidentiality protection includes creating a temporary identity index and associating this index with a sender-receiver pair, i.e., the UE and the network element. The temporary identity index is created using a secret key and an algorithm known to the sender and receiver and public information identifying the sender of the message.

The secret key and algorithm to be used may be determined during authentication of the user equipment by the visiting network.

Once the temporary identity index is created, it may be inserted in a header of the message. For example, the temporary identity index may be inserted in a call-info header field of a session initiation protocol (SIP) message in place of a request Uniform Resource Identifier (URI) for providing the sender's identity. When the SIP message is to be sent, the sender first generates the SIP message which is then encrypted using an encryption algorithm determined during registration of the user equipment. As defined in RFC2543bis-04, the SIP message may include one of six different SIP request methods. A line containing the request method (i.e., INVITE) of the SIP message, another line including a call-info header field and an empty line are added to the encrypted SIP message. An integrity algorithm is performed using the entire message as an input to calculate a message authentication code (MAC). A line containing an integrity header is added to the SIP message to indicate the MAC

In an alternative embodiment, the Request URI (the URI of the sender) is encrypted using the same encryption algorithm used for encrypting the message and the encrypted URI is included on the line with the request method.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings, wherein like reference characters denote similar elements throughout the several views:
Fig. 1 is a block diagram of a user equipment, a visiting network and a home network;
Fig. 2 is a timing diagram showing the signals during a registration of the user equipment with the visiting network;
Fig. 3 is a schematic diagram of a session initiation protocol message according to an embodiment of the present invention; and
Fig. 4 is a schematic diagram of a session initiation protocol message according to an embodiment of the present invention.

### DETAILED DESCRIPTION OF THE PRESENTLY PREFERRED EMBODIMENTS

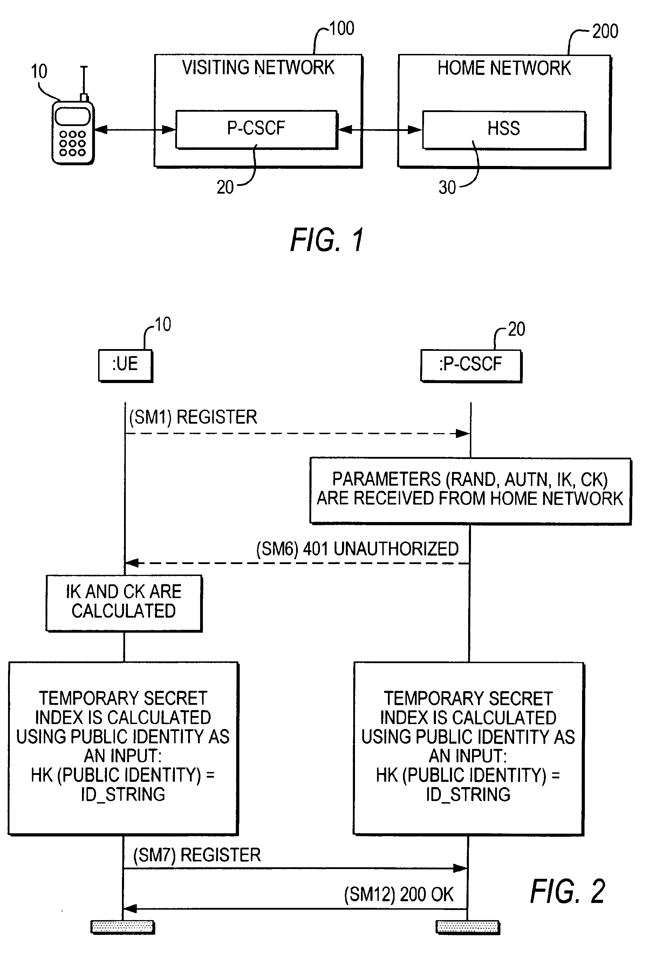

Referring to Figs. 1 and 2, a user equipment (UE) 10 registers with a network element such as a proxy-Call Session Control Function (P-CSCF) 20 in a visiting network 100 before starting a session. In Fig. 1, the UE 10 is depicted as a mobile phone, however the UE 10 may comprise any user device capable of participating in a session such as a mobile phone, a personal digital assistant (PDA), a portable computer, or a desktop computer. Furthermore, the UE 10 may register with a P-CSCF in a home network of the UE depending on where the UE 10 is located. During registration, the visiting network 100 contacts the home subscriber server (HSS) 30 in the home network 200 of the UE 10 and determines with the UE 10 what algorithms and keys will be used for the registration period. As shown in the timing diagram of Fig. 2, the UE 10 initiates the registration by sending a registration message SM1 to the P-CSCF 20 in the visiting network 100. The home network 200 is then contacted by the visiting network 100 and a random number (RAND), an authentication token (AUTN), an integrity key (IK), and a ciphering key (CK) are sent to the visiting network 100 by the home network 200. The required information is sent to UE 10 with a challenge and the UE 10 determines therefrom the IK and CK. Both the P-CSCF 20 and the UE 10 then calculate a temporary identity index using a hash function Hk(x), where x is a public identity of the UE 10, and k is one of the private keys CK and IK. The UE 10 then sends a further registration message SM7, and the P-CSCF 20 returns a message SM12 indicating that the UE 10 is authenticated. During this registration period, the UE 10 and the P-CSCF 20 also determine an encryption algorithm and an integrity algorithm to be used. The algorithms, keys, and temporary index to be used for the session are collectively referred to as a security suite are saved in a memory of the visiting network 100 and a memory of the UE 10.

According to the present invention, a temporary identity index is created for both the UE 10 and the P-CSCF 20 by performing a hash function using a private key and some public information identifying the UE 10. Each temporary identity index is created separately at both the UE 10 and the P-CSCF 20. The private key may be IK or CK and the public information may be the IMPU public identity of the UE as defined in 3G TS 33.203 V0.6.0. The calculation, using the hash function, produces an ID string (i.e., the temporary identity index) which is saved as part of the security suite at the UE 10 and P-CSCF 20. Once a UE 10 is registered, the UE 10 may initiate an IP multimedia session.

Alternately, the temporary identity indices for the sender-receiver pair may be generated by the network 100. In this alternative embodiment, the temporary identity index may be fixed for the duration of the registration period or the network may refresh the temporary identity index at least once during the registration period.

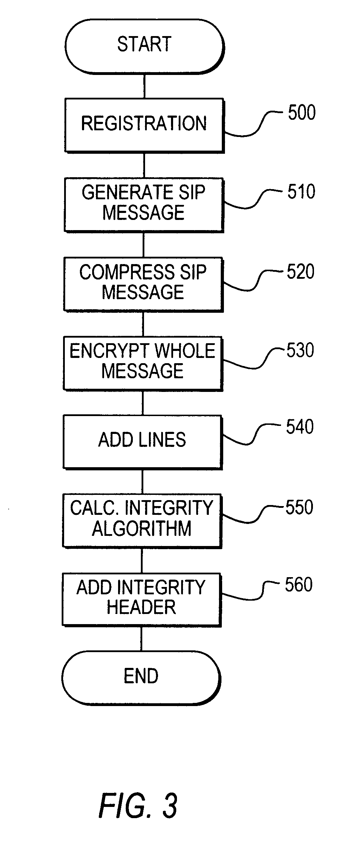

The method of the present invention according to a first embodiment of the present invention is shown in Fig. 3. The UE 10 first registers with the visiting network 100 and the temporary identity indices are created as described above, step 500. When an SIP message is required, such as when a session is to be initiated, the sender determines which request method the SIP message should contain and then generates the SIP message, step 510. The SIP specification defines a set of possible request methods for the different requests that the SIP may be required to make. For example, the INVITE request method is used to initiate a session. SIP messages for the management or termination of a session will require different request methods.

The SIP message generated in step 510 may be optionally compressed in step 520. The whole SIP message is then encrypted in step 530 using the encryption algorithm determined during registration. A line including the request method. another line including a call-info header and an empty line are then added to the encrypted message, step 540. The line containing the request method may also be included as part of the SIP message and therefore encrypted with the whole SIP message in said step 530. An integrity algorithm is then performed using the entire message (with or without the line containing the request method) as an input to calculate a message authentication code (MAC), step 550, and step 560 includes adding an integrity header to the message to indicate the MAC. The MAC integrity algorithm is an algorithm for generating authentication tags, which are used to ensure the authenticity and integrity of a transmitted message. For example, MD5-MAC is a known MAC integrity algorithm which can be used in step 550. Alternatively, a Modification Detection Code (MDC) integrity algorithm may be used instead of a MAC integrity algorithm. The integrity header may optionally include the integrity algorithm and other parameters that were used to calculate the MAC.

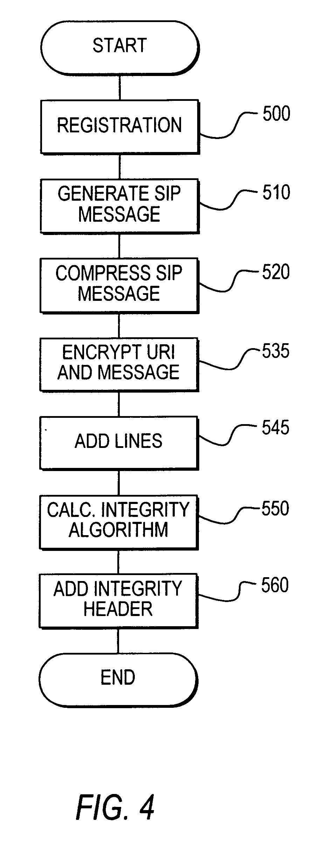

In an alternative embodiment, shown in Fig. 4, the SIP message is generated in step 510 and is optionally compressed in step 520 as in the previous embodiment. However, in the Fig. 4 embodiment, the request URI is encrypted along with the message in step 535 instead of encrypting just the whole message as in step 530 of the previous embodiment. The encrypted URI is included in a line with the request method. Another line including a call-info header and an empty line are then added between the encrypted URI and the encrypted message, step 545. The embodiment of Fig. 4 is used to generate an SIP message that is most similar to a conventional SIP message but in addition has confidentiality protection. In this embodiment, the request URI is encrypted along with the message. However, other identification parameters could also be encrypted with the message and inserted in a header as required by a specific message.

Thus, while there have shown and described and pointed out fundamental novel features of the invention as applied to preferred embodiments thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

A session initiation protocol message includes confidentiality protection in that the sender of the message is identified using a temporary identity index generated by calculating a hash function for a private key and public information which indicates the sender. The result of the calculation of the hash function is the temporary identity index and is associated with a specific sender-receiver pair.

## Claims

1. A method for incorporating confidentiality protection in a message transmitted between a user equipment and a network element in a communication network, wherein the message requires a sender identification and the sender of the message is one of the user equipment and the network element, the method comprising the steps of:
(a) assigning a temporary identity index for the sender of the message at each of the user equipment and the network element including performing an algorithm for generating the temporary identity index using public information which identifies the sender of the message as an input to the algorithm; and
(b) adding a header including the temporary identity index to the message to identify the sender of the message prior to transmission of the message between the user equipment and the network element.

2. The method of claim 1, wherein in said step (a), performing an algorithm includes performing a hash function using a private key and the public information as inputs to generate the temporary identity index.

3. The method of claim 2, wherein the public information used in said step (a) is an internet protocol multimedia public identity of the user equipment.

4. The method of claim 1, wherein the network element is located in a visiting network of the user equipment and said method further comprises the step of registering the user equipment with the visiting network before said step (a).

5. The method of claim 4. wherein said step of registering comprises sending, by the user equipment, a registration message to the network element, and retrieving, by the visiting network, the private key from a home network of the user equipment.

6. The method of claim 5, wherein the user equipment is authenticated after the network element retrieves the private key from the home network.

7. The method of claim 5, wherein the private key comprises one of a ciphering key and an integrity key.

8. The method of claim 5, further comprising the steps of determining an encryption algorithm and saving the private key, the encryption algorithm, and the temporary identity index in a memory in the visiting network.

9. The method of claim 1, wherein the message is a session initiation protocol message and the method further comprising the steps of:
generating the session initiation protocol message and encrypting the session initiation protocol message before performing said step (b); and
wherein said step (b) includes adding another line including the temporary identity index before the encrypted session initiation protocol message.

10. The method of claim 9, further comprising the steps of adding a line before the encrypted session initiation protocol message including a request method of the session initiation protocol message.

11. The method of claim 9, wherein the session initiation protocol message includes a line including the request method that is encrypted with the session initiation protocol message.

12. The method of claim 9, wherein said step of adding another line comprises adding a call-info header and inserting the temporary identity index in the call-info header of the session initiation protocol message.

13. The method of claim 12, further comprising the step of performing an integrity algorithm for the entire session initiation protocol message to calculate a code and adding an integrity header to the session initiation protocol message indicating the code.

14. The method of claim 13, wherein said integrity algorithm comprises one of a message authentication code integrity algorithm and a modification detection code integrity algorithm.

15. The method of claim 14, wherein said integrity algorithm comprises MD5-MAC integrity algorithm.

16. The method of claim 9, further comprising the step of performing an integrity algorithm for the entire session initiation protocol message to calculate a code and adding an integrity header to the session initiation protocol message indicating the code.

17. The method of claim 16, wherein said integrity algorithm comprises one of a message authentication code integrity algorithm and a modification detection code integrity algorithm.

18. The method of claim 17, wherein said integrity algorithm comprises MD5-MAC integrity algorithm.

19. The method of claim 10, further comprising the step of encrypting a uniform resource identifier for the sender and adding the encrypted uniform resource identifier to the line including the request method.

20. The method of claim 19, wherein said step of adding another line comprises adding a call-info header and inserting the temporary identity index in the call-info header of the session initiation protocol message.

21. The method of claim 1, wherein said user equipment is a mobile phone.

22. The method of claim 1, wherein the algorithm is known to both the user equipment and the network element and said step (a) includes separately performing the algorithm at each of the user equipment and the network element.

23. The method of claim 1, wherein said step (a) includes performing the algorithm at the communication network and assigning the temporary identity index to the user equipment and the network element.

24. A system for performing confidentiality protection in a message transmitted between a user equipment and a network element in a communication network, wherein the message requires sender identification the sender of the message is one of the user equipment and the network element, said system comprising:
means for assigning a temporary identity index for the sender of the message at each of the user equipment and the network element including means for performing an algorithm for generating the temporary identity index using public information which identifies the sender as an input; and
means for adding a header including the temporary identity index to the message to identify the sender of the message prior to transmission of the message between the user equipment and the network element.

25. The system of claim 24, wherein said means for performing an algorithm includes means for performing a hash function using a private key and the public information for generating the temporary identity index.

26. The system of claim 25, wherein the public information is an internet protocol multimedia public identity of the sender.

27. The system of claim 24, wherein the communication network is a visiting network for the user equipment and the system further comprises means for registering the user equipment with the visiting network.

28. The system of claim 27, wherein said means for registering comprises means for sending a registration message from the user equipment to the visiting network, and means for retrieving the private key from a home network of the user equipment.

29. The system of claim 28, wherein said means for registering further comprises means for authenticating the user equipment.

30. The system of claim 28, wherein the private key comprises one of a ciphering key and an integrity key.

31. The system of claim 28, further comprising means for determining an encryption algorithm and wherein said visiting network comprises a memory for storing the private key, the encryption algorithm, and the temporary identity index.

32. The system of claim 24, wherein the message is a session initiation protocol message and said system further comprises:
means for generating the session initiation protocol message and encrypting the session initiation protocol message; and
wherein said means for adding a header including the temporary identity index includes means for adding another line including the temporary identity index before the encrypted session initiation protocol message.

33. The system of claim 32, further comprising means for adding a line before the encrypted session initiation protocol message including a request method of the session initiation protocol message.

34. The system of claim 32, wherein the session initiation message includes a line including a request method that is encrypted with the session initiation protocol message by said means for generating and encrypting .

35. The system of claim 32, wherein said means for adding another line comprises means for adding a call-info header and inserting the temporary identity index in the call-info header of the session initiation protocol message.

36. The system of claim 35, further comprising means for performing an integrity algorithm for the entire session initiation protocol message to calculate a code and adding an integrity header to the session initiation protocol message indicating the code.

37. The system of claim 36, wherein said integrity algorithm comprises one of a message authentication code integrity algorithm and a modification detection code integrity algorithm.

38. The system of claim 37, wherein said integrity algorithm comprises MD5-MAC.

39. The system of claim 32, further comprising means for performing an integrity algorithm for the entire session initiation protocol message to calculate a code and adding an integrity header to the session initiation protocol message indicating the code.

40. The system of claim 39, wherein said integrity algorithm comprises one of a message authentication code integrity algorithm and a modification detection code integrity algorithm.

41. The system of claim 40, wherein said integrity algorithm comprises MD5-MAC.

42. The system of claim 33, further comprising means for encrypting a uniform resource identifier of the sender and means for adding the encrypted uniform resource identifier to the line including the request method.

43. The system of claim 42, wherein said means for adding another line comprises means for adding a call-info header and inserting the temporary identity index in the call-info header of the session initiation protocol message.

44. The system of claim 24, wherein said user equipment is a mobile phone.

45. The method of claim 24, wherein the algorithm is known to both the user equipment and the network element and said means for assigning includes means for separately performing the algorithm at each of the user equipment and the network element.

46. The method of claim 24, wherein said means for assigning includes means for performing the algorithm at the communication network and assigning the temporary identity index to the user equipment and the network element.

47. A computer-readable memory storing computer executable instructions for providing confidentiality protection to a message transmitted between a user equipment and a network element in a communication network, wherein the message requires sender identification and the sender of the message is one of the user equipment and the network element, said computer-readable memory comprising:
computer executable instructions for assigning a temporary identity index for the sender of the message at each of the user equipment and the network element including computer instructions for generating the temporary identity index by performing an algorithm using public information which identifies the sender of the message as an input; and
computer executable instructions for adding a header including the temporary identity index to the message to identify the sender of the message prior to transmission of the message between the user equipment and the communication network.

48. The memory of claim 47, wherein said computer-executable instructions for generating the temporary identity index include computer-executable instructions for performing a hash function using a private key and the public information for generating the temporary identity index.

49. The memory of claim 47, wherein the network element is located in a visiting network of the user equipment and the memory further comprises computer-executable instructions for registering the user equipment with the communication network.

50. The memory of claim 49, wherein said computer-executable instructions for registering comprises computer-executable instructions for sending a registration message from the user equipment to the network element.

51. The memory of claim 50, wherein the private key comprises one of a ciphering key and an integrity key.

52. The memory of claim 47, wherein the message is a session initiation protocol message and said memory further comprises:
computer-executable instructions for generating the session initiation protocol message and encrypting the session initiation protocol message before transmitting the message; and
wherein said computer-executable instructions for adding a header including the temporary identity index include computer-executable instructions for adding another line including the temporary identity index before the encrypted session initiation protocol message.

53. The memory of claim 52, further comprising computer executable instructions for adding a line before the encrypted session initiation protocol message including a request method of the session initiation protocol message.

54. The memory of claim 52, further comprising computer executable instructions for adding a line before the encrypted session initiation protocol message including a request method of the session initiation protocol message that is encrypted with the session initiation protocol message.

55. The memory of claim 52, wherein said computer-executable instructions for adding another line comprise computer-executable instructions for adding a call-info header and inserting the temporary identity index in the call-info header of the session initiation protocol message.

56. The memory of claim 55, further comprising computer-executable instructions for performing an integrity algorithm for the entire session initiation protocol message to calculate a code and adding an integrity header to the session initiation protocol message indicating the code.

57. The memory of claim 56, wherein said integrity algorithm comprises one of a message authentication code integrity algorithm and a modification detection code integrity algorithm.

58. The memory of claim 56, wherein said integrity algorithm comprises MD5-MAC.

59. The memory of claim 53, further comprising computer-executable instructions for encrypting a uniform resource identifier of the sender and for adding the encrypted uniform resource identifier to the line including the request method.

60. The memory of claim 59, wherein said computer-executable instructions for adding another line comprises computer-executable instructions for adding a call-info header and inserting the temporary identity index in the call-info header of the session initiation protocol message.

61. The memory of claim 47, wherein said user equipment is a mobile phone.

62. The memory of claim 47, wherein the algorithm is known to both the user equipment and the network element and said computer instructions for generating include computer instructions for separately performing the algorithm at each of the user equipment and the network element.

63. The memory of claim 47, wherein said computer instructions for assigning include computer instructions for performing the algorithm at the communication network and assigning the temporary identity index to the user equipment and the network element.

64. A user equipment device for providing confidentiality protection to a message transmitted from the user equipment to a network element in a communication network, wherein the message requires sender identification, said user equipment device comprising:
means for assigning a temporary identity index for the user equipment; and
means for adding a header including the temporary identity index to the message to identify the user equipment as the sender of the message prior to transmission of the message between the user equipment and the communication network.

65. The device of claim 64, wherein said means for assigning includes means for generating the temporary identity index by performing an algorithm using public information which identifies the user equipment as the sender of the message as an input.

66. The device of claim 65, wherein said means for generating the temporary identity index include means for performing a hash function using a private key and the public information for generating the temporary identity index.

67. The device of claim 64, wherein the message is a session initiation protocol message and said device further comprises:
means for generating the session initiation protocol message and encrypting the session initiation protocol message before transmitting the message; and
wherein said means for adding a header including the temporary identity index include means for adding another line including the temporary identity index before the encrypted session initiation protocol message.

68. The device of claim 67, further comprising means for adding a line before the encrypted session initiation protocol message including a request method of the session initiation protocol message.

69. The device of claim 67, further comprising means for adding a line before the encrypted session initiation protocol message including a request method of the session initiation protocol message that is encrypted with the session initiation protocol message.

70. The device of claim 67, wherein said means for adding another line comprise means for adding a call-info header and inserting the temporary identity index in the call-info header of the session initiation protocol message.

71. The device of claim 70, further comprising means for performing an integrity algorithm for the entire session initiation protocol message to calculate a code and adding an integrity header to the session initiation protocol message indicating the code.

72. The device of claim 69, further comprising means for encrypting a uniform resource identifier of the user equipment and for adding the encrypted uniform resource identifier to the line including the request method.

73. The device of claim 64, wherein said user equipment device is a mobile phone.

74. The device of claim 64, wherein said means for assigning include means for receiving the temporary identity index from the communication network and assigning the temporary identity index to the user equipment.
